Europäisches Patentamt

European Patent Office

Office européen des brevets

(11) Veröffentlichungsnummer: **0 442 089 A2**

## EUROPÄISCHE PATENTANMELDUNG

(21) Anmeldenummer: 90124338.6

(22) Anmeldetag: **15.12.90**

(51) Int. Cl.5: **B60T 8/26**, B60T 8/94, B60T 8/48, B60T 8/44

(30) Priorität: **13.02.90 DE 4004270**

(43) Veröffentlichungstag der Anmeldung:
**21.08.91 Patentblatt 91/34**

(84) Benannte Vertragsstaaten:
**DE FR GB SE**

(71) Anmelder: **ROBERT BOSCH GmbH**
**Postfach 10 60 50**
**W-7000 Stuttgart 10(DE)**

(72) Erfinder: **Friedow, Michael**
**Uracher Weg 9**
**W-7146 Tamm(DE)**
Erfinder: **Willmann, Karl-Heinz, Dipl.-Ing.**
**Arndtstrasse 45**
**W-7149 Freiberg/Neckar(DE)**
Erfinder: **Holzmann, Roland, Dipl.-Ing.**
**Heuberg 72**
**W-8867 Öttingen(DE)**

(54) **Bremsanlage.**

(57) Bei einer Bremsanlage mit einem Hauptbremszylinder zur Abgabe eines mittels eines Bremspedals steuerbaren Bremsdruckes und dessen Übertragung auf zumindest einen Bremskreis, welcher den Hauptbremszylinder mit entsprechenden Radbremszylindern von Vorderrädern und Hinterrädern verbindet, ist in jede Hauptleitung der Bremskreise zumindest ein Absperrventil für eine Antiblockierregelung eingeschaltet. Dabei stehen ein I. und II. Bremskreis nach den Absperrventilen mit einem Einspeisesystem in Verbindung, welches Einrichtungen zum Einspeisen von Bremsflüssigkeit unterschiedlichen Druckes in den I. und II. Bremskreis aufweist.

Fig. 1

# BREMSANLAGE

Stand der Technik

Die Erfindung betrifft eine Bremsanlage entsprechend dem Oberbegriff von Anspruch 1.

Derartige Bremsanlagen mit einem Hauptbremszylinder, über welchen Bremskreise, insbesondere ein Bremskreis für die Vorderräder und ein Bremskreis für die Hinterräder, mit Bremsflüssigkeit versorgt werden, sind hinlänglich bekannt. Das gleiche gilt auch für eine entsprechende Absperrventilanordnung zur Antiblockierregelung.

Die Bremsauslegung für Fahrzeugachsen hat insbesondere die dynamischen Achslasten und deren Änderungen zu berücksichtigen. Im Idealfall ist die Bremskraft immer proportional der Abbremsung und der dynamischen Achslast. Diese "ideale" Bremskraftverteilung ändert sich mit der Abbremsung jedoch sehr stark.

Nach den Richtlinien der EG und der ECE dürfen bei einer Abbremsung des Fahrzeuges bis 0,8g die Räder der Hinterachse nicht vor denjenigen der Vorderachse blockieren, weil bei zuerst blockierenden Rädern der Hinterachse ein Fahrzeug schleudert, während es bei zuerst blockierenden Rädern der Vorderachse zwar die Lenkfähigkeit verliert, aber relativ fahrstabil bleibt.

Die ideale Bremskraftverteilung wäre dann gegeben, wenn beide Achsen unabhängig vom Beladungszustand in gleichem Umfang zur Abbremsung beitragen würden. Dies ist jedoch kaum zu realisieren. Um die vorgegebenen Richtlinien einzuhalten, wird üblicherweise der Bremsdruck für die Hinterachse gemindert oder begrenzt oder eine Festabstimmung des Fahrzeuges mit sehr kleinen Radbremszylindern an der Hinterachse gewählt. Daraus resultiert jedoch eine Überbremsung der Vorderachse (nicht zu verwechseln mit Blockierung) gegenüber der Hinterachse. Zumindest bis zu einer Abbremsung von 0,8g wird dies so realisiert. Bei stärkeren Abbremsungen kann jedoch eine Umkehr der Blockierreihenfolge eintreten, da dann die Hinterachse überbremst wird. In jedem Fall trägt die jeweils überbremste Achse überproportional zur Abbremsung bei.

Die meisten Abbremsungen finden in einem Bereich von unter 0,3g statt. Durch die dauernde stärkere Belastung verschleißt die Bremsanlage an der Vorderachse erheblich schneller als an der Hinterachse. Zudem werden optimale Abbremsungen nicht realisiert, was besonders für schwere, leistungsfähige Fahrzeuge problematisch ist, bei denen die Belastbarkeitsgrenze der Vorderachse die möglichen Fahrleistungen einschränkt.

Bei einem funktionsfähigen Antiblockiersystem, welches die Stabilität eines Fahrzeuges gewährleistet, ist die zunehmende Unterbremsung der Hinterachse gegenüber der Vorderachse nicht nur unnötig, sondern verhindert sogar optimale Abbremsungen, da die Bremsdrücke deutlich unter der Blockiergrenze bleiben.

Ziel der vorliegenden Erfindung ist es, bei funktionsfähigem Antiblockiersystem eine hohe Druckaussteuerung in allen Radbremszylindern zu realisieren und trotzdem bei einem Ausfall des Antiblockiersystems das Kraftfahrzeug beherrschbar und stabil zu halten.

Vorteile der Erfindung

Gemäß der vorliegenden Erfindung steht ein I. und II. Bremskreis nach den Absperrventilen mit einem Einspeisesystem in Verbindung, welches Einrichtungen zum Einspeisen von Bremsflüssigkeit unterschiedlichen Druckes in den I. und II. Bremskreis aufweist. Hierdurch wird eine Bremsdruckanhebung einzelner Kreise oder Räder im Normalbremsfall, d. h. ohne Antiblockierregelung, ermöglicht. Die Einspeisung der unterschiedlichen Drücke in den I. bzw. II. Bremskreis erfolgt fahrergesteuert und zwar so, daß nur eine relative Drucküberhöhung zwischen den Hinterachskreis gegenüber dem Vorderachskreis stattfindet. Hierdurch werden beispielsweise die bisher stark unterbremsten Bremseinrichtungen der Hinterachse vermehrt in einen Bremsvorgang einbezogen.

Zur Regelung der Einspeisung sind zwischen dem I. bzw. II. Bremskreis und dem Einspeisesystem jeweils Einspeiseventile vorgesehen, über welche das Zuschalten des Einspeisesystems reguliert wird. Auf die Einspeiseventile für den I. Bremskreis folgen Rückschlagventile, welche verhindern, daß über zusätzliche Volumina und durch Leckagen im Einspeisesystem Fluid des I. Bremskreises verbraucht wird. Sie tragen so erheblich zur Sicherheit bei. Anstelle dieser Rückschlagventile können auch entsprechende Magnetventile mit einer Rückschlagposition vorgesehen sein. Als Fördereinrichtung für die zusätzliche Bremsflüssigkeit aus dem Einspeisesystem in den I. bzw. II. Bremskreis ist eine selbstansaugende Pumpe vorgesehen, wobei ihr, falls der Volumenstrom nicht ausreicht, zusätzlich ein Speicher zugeordnet ist. Es kann sich erfindungsgemäß sowohl um eine einkreisige wie auch um eine zweikreisige Pumpe handeln. In der Regel wird diese Pumpe separat elektromotorisch betrieben. Sie kann auch als Tandempumpe oder Flanschpumpe ausgebildet sein.

In einem Ausführungsbeispiel der Erfindung ist die Pumpe über eine Leitung direkt mit dem Einspeiseventil des II. Bremskreises verbunden, während der Einspeisedruck für die Einspeiseventile des I. Bremskreises über Druckbegrenzungsventile angleichbar ist. Wenn im vorliegenden Fall vom I. bzw. II. Bremskreis gesprochen wird, so handelt es sich in der Regel um eine Schwarz-Weiß-Bremskreisaufteilung, wobei der II. Bremskreis die Radbremssysteme der Hinterachse und der I. Bremskreis die Radbremssysteme der Vorderachse mit Bremsflüssigkeit versorgt. Sollte es jedoch wünschenswert sein, so kann die Versorgung auch umgedreht geschehen.

Wesentlich sind im vorliegenden Fall die Druckbegrenzungsventile. Über diese Druckbegrenzungsventile soll die Einspeisung in den I. Bremskreis so gesteuert werden, daß sie in Abhängigkeit eines Bremsdruckes im II. Bremskreis erfolgt. Aus diesem Grunde ist auch ein Druckbegrenzungsventil mit zwei gleich großen, hydraulisch beaufschlagten Flächen seines Ventilkörpers versehen, wobei die eine Fläche mit dem II. Bremskreis bevorzugt nahe dem Hauptbremszylinder verbunden ist. Bei dem anderen Druckbegrenzungsventil sind die beaufschlagten Flächen des Ventilkörpers verschieden groß, dabei steht die kleinere Fläche mit dem Lieferdruck der Pumpe in Verbindung. Als Gegenkräfte zu diesen Drücken findet der Vorderachs-Einspeisedruck, der zwischen den Druckbegrenzungsventilen herrscht, Verwendung und zwar sowohl für das erste wie auch für das zweite Ventil. Erhöht sich beispielsweise der Druck in der Speiseleitung nach dem ersten Druckbegrenzungsventil über den Druck, der in dem II. Bremskreis herrscht, so schaltet das Druckbegrenzungsventil durch und gibt den Weg für die Bremsflüssigkeit zurück zu einer Rückführleitung bzw. dem entsprechenden Vorratsbehälter frei. Dagegen wird durch das erste Druckbegrenzungsventil die Einspeiseleitung von der Pumpe zu dem I. Bremskreis dann geöffnet, wenn ein relativ höherer Druck vor der kleineren Fläche des Ventilkörpers aufgebaut ist. Wenn der überhöhte Druck auf die kleinere Fläche den Haltedruck auf die größere Fläche überwiegt, öffnet das Ventil und begrenzt den Einspeisedruck für den II. Bremskreis. Da der Gegenhaltedruck aber von dem Bremsdruck im II. Bremskreis abhängt, findet immer nur eine relative Überhöhung des Druckes in dem einen Bremskreis im Verhältnis zum Druck in dem anderen Bremskreis statt. Das Einspeisesystem kann niemals eine Bremsung gegen den Willen des Fahrers einleiten, wie dies bei vielen, vom Bremsdruck unabhängigen Systemen möglich ist.

Dabei soll es von untergeordneter Bedeutung sein, wie die einzelnen Druckbegrenzungsventile ausgestaltet sind. Wesentlich ist, daß zumindest in dem einen Druckbegrenzungsventil zwei verschieden große, hydraulisch beaufschlagte Flächen ausgebildet werden, wobei die eine, größere Fläche unter dem Druck des anderen Bremskreises steht.

Im Rahmen der Erfindung liegt auch, daß eine möglicherweise vorgesehene Antriebsschlupfregelung ebenfalls über das Einspeisesystem erfolgt. Eine getrennte Regelung eines jeden Rades ist für den II. Bremskreis vorgesehen, bei dem die entsprechenden Regelventile für jedes Rad erst auf das entsprechende Einspeiseventil folgen. Die Bremsflüssigkeit zur Antriebsschlupfregelung liefert selbstverständlich die oben genannte Pumpe, wobei bei einer Antriebsschlupfregelung die Einspeiseventile offen sind.

Im Falle der Verwendung einer zweikreisigen Pumpe bietet es sich an, auch die Druckbegrenzungsventile zu entkoppeln. Auch hier kommt es jedoch wieder auf das Verhältnis der hydraulisch beaufschlagten Fläche innerhalb des Druckbegrenzungsventiles an. In einem Ausführungsbeispiel ist dem I. Bremskreis das Druckbegrenzungsventil mit zwei gleichgroßen, hydraulisch beaufschlagten Flächen zugeordnet. Dieses Druckbegrenzungsventil ist mit dem I. Bremskreis nahe dem Hauptbremszylinder verbunden. Erhöht sich der Druck in diesem I. Bremskreis, so schaltet auch das Druckbegrenzungsventil erst bei einem erhöhten Einspeisedruck um.

Ähnlich ist das zweite Druckbegrenzungsventil einerseits mit dem II. Bremskreis nahe dem Bremskraftverstärker und andererseits mit der Einspeiseleitung gekoppelt. Der Druck in der Einspeiseleitung beaufschlagt jedoch die kleinere Fläche, so daß hier der Einspeisedruck wesentlich erhöht werden kann, bevor das Druckbegrenzungsventil umschaltet.

Bei einem anderen Ausführungsbeispiel der Erfindung fehlt das eigentliche Einspeiseventil zwischen Pumpe und dem II. Bremskreis. Stattdessen ist ein Einspeise- und Absperrventil vorgesehen, wodurch die Regelung bzw. die Abstimmung zwischen Einspeisesystem und II. Bremskreis erleichtert wird. Eine Drossel, welche diesem Einspeise- und Absperrventil vorgeschaltet ist, begrenzt den Druckaufbaugradienten in den nachgeschalteten Radbremszylindern bei einem Umschalten auf eine elektrische bzw. elektronische Bremskraftverteilung.

Es versteht sich von selbst, daß die vorliegende Bremsanlage sowohl mit einem Drei- wie auch mit einem Vier-Kanal-Antiblockiersystem arbeiten kann. Auch dieses Vier-Kanal-Antiblockiersystem soll von dem vorliegenden Erfindungsgedanken umfaßt sein.

Eine andere Möglichkeit der Bremskraftverteilung besteht darin die Druckaufnahme und Steuerung nicht den entsprechenden Druckbegrenzungsventilen zu überlassen, sondern hierzu eine Steuereinheit vorzusehen. Dabei erfolgt eine Druckaufnahme sowohl im I. wie auch im II. Bremskreis und im Einspeisesystem. Ferner wird zusätzlich auch der Pedalweg überwacht. Die Steuereinheit übernimmt dann die Regelung sämtlicher Ventile und auch des Motors des Einspeisesystems. In der Steuereinheit wird einmal der Druck in den beiden Bremskreisen miteinander verglichen und anhand einer Idealverteilung geregelt. Die Regelung geschieht dann durch Einspeisen von zusätzlicher Bremsflüssigkeit durch das Einspeisesystem in den entsprechenden Bremskreis. Aus diesem Grunde sind beide Bremskreise über ein entsprechendes Einspeiseventil mit dem Einspeisesystem verbunden. Weitere Ventile zur Regelung der Einspeisung sind selbstverständlich vorgesehen.

Die Steuereinheit übernimmt auch die Regelung eines Antiblockierfalles, wobei die entsprechenden Ventile gesperrt und andere Ventile zur Druckentlassung geöffnet werden.

Mit Hilfe des Pedalweggebers wird dafür gesorgt, daß bei Reibwerterhöhung während eines Antiblockierfalles die Kennlinienverschiebung so groß wird, daß beim Lösen der Bremse das Zentralventil im Hauptbremszylinder nicht beschädigt wird. Dies wird damit erreicht, daß im Bedarfsfall zusätzlicher Pedalweg freigegeben wird, was entweder durch einen Druckaufbau im I. Bremskreis oder durch Volumenverschiebung aus dem Hauptbremszylinder in den Vorratsbehälter erfolgt. Auch hier kommt es auf den Vergleich eines vorgegebenen Pedalweges mit dem ermittelten Druck im I. Bremskreis an.

Ein wesentlicher Vorteil der Anordnung mit der Steuereinheit liegt darin, daß die Nullstellung der Drucksensoren korrigiert werden kann, wenn keine Bremsung stattfindet. Dies geschieht automatisch über die Steuereinheit durch Betätigung der einzelnen Ventile.

Ebenso ist ein Testzyklus für den Entlüftungszustand der Hinterachse bei stillstehendem Fahrzeug vorgesehen. Bei diesem Testzyklus wird der II. Bremskreis für die Hinterachse unter Druck gesetzt und die Zeit ermittelt, welche benötigt wird, um einen bestimmten Druckaufbau bzw. die Differenz zwischen zwei Druckwerten zu überwinden. Daraus läßt sich eine Zeit errechnen, die bei einem Druckaufbau nicht überschritten werden darf, wenn der Entlüftungszustand in Ordnung ist.

Auch die Antriebsschlupfregelung erfolgt über das Einspeisesystem entsprechend dem bekannten hydraulischen Multiplexverfahren.

Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 ein Blockschaltbild einer erfindungsgemäßen Bremsanlage mit elektrischer bzw. elektronischer Bremskraftverteilung;

Figur 2 einen schematischen Längsschnitt durch ein Druckbegrenzungsventil;

Figur 3 einen schematischen Längsschnitt durch ein weiteres Druckbegrenzungsventil;

Figur 4 ein Blockschaltbild einer weiteren Ausführungsform einer elektrischen bzw. elektronischen Bremskraftverteilung;

Figur 5 ein Blockschaltbild eines weiteren Ausführungsbeispiels einer elektrischen bzw. elektronischen Bremskraftverteilung;

Figur 6 ein Blockschaltbild eines weiteren Ausführungsbeispiels einer elektrischen bzw. elektronischen Bremskraftverteilung;

Figur 7 ein Blockschaltbild eines weiteren Ausführungsbeispiels einer elektrischen bzw. elektronischen Bremskraftverteilung.

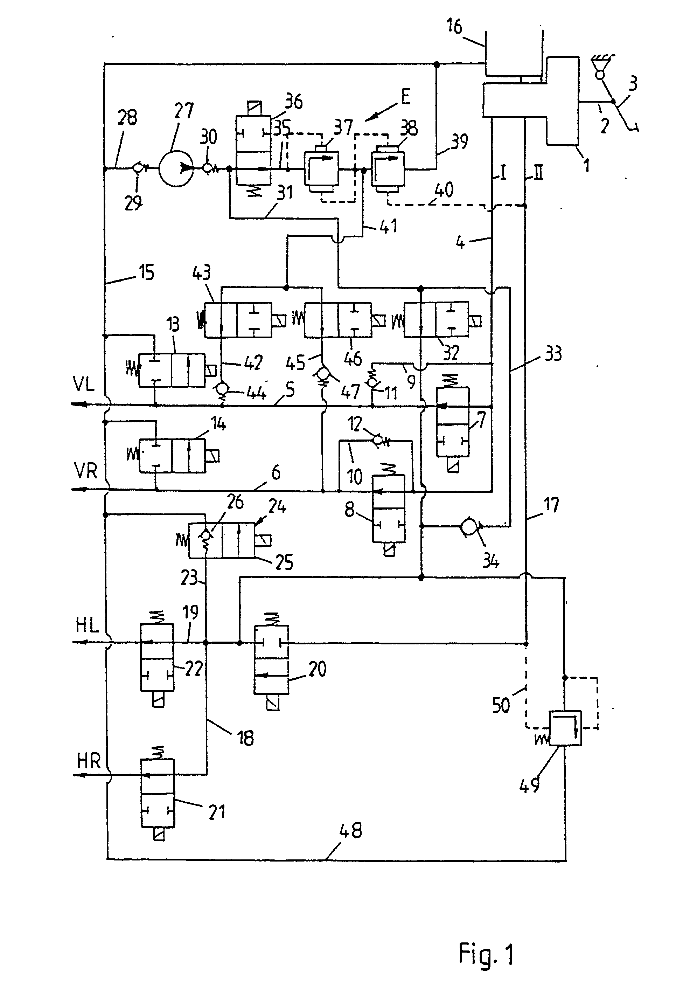

Gemäß Figur 1 weist eine Bremsanlage einen I. und einen II. Bremskreis auf. Beide Bremskreise münden aus einem entsprechenden Hauptbremszylinder 1, dessen nähere Ausgestaltung für zwei Bremskreise allgemein bekannt ist. Der Hauptbremszylinder 1 wird über eine Kolbenstange 2 mit Bremsdruck beaufschlagt, welcher von einem Bremspedal 3 vom Fuße eines Fahrers übertragen wird.

Über den I. Bremskreis werden das linke und rechte Vorderrad bzw. deren nicht näher gezeigte Radbremszylinder mit Bremsflüssigkeit versorgt. Dies geschieht über eine gemeinsame Hauptleitung 4, welche sich in zwei Zweigleitungen 5 und 6 aufteilt. In jede Zweigleitung 5 bzw. 6 ist ein Absperrventil 7 bzw. 8 eingeschaltet, mittels denen die jeweilige Zweigleitung 5 bzw. 6 von der Hauptleitung 4 abgesperrt werden kann. Beide Absperrventile 7 bzw. 8 können durch eine Bypaßleitung 9 bzw. 10, in welche jeweils ein Rückschlagventil 11 bzw. 12 eingeschaltet ist, umgangen werden.

Zum Abbau eines Bremsdruckes beispielsweise bei einer auftretenden Antiblockierregelung ist jede Zweigleitung 5 bzw. 6 durch ein weiteres Ablaßventil 13 bzw. 14 mit einer Rücklaufleitung 15 zu einem Vorratsbehälter 16 verbunden.

Der II. Bremskreis besitzt ebenfalls eine Hauptleitung 17, welche sich in zwei Zweigleitungen 18 und 19 aufteilt. Vor der Aufteilung ist ein Absperrventil 20 vorgesehen, durch welches die Hauptleitung 17 gesperrt werden kann. In jede Zweigleitung 18 bzw. 19 ist ferner noch ein Absperr- und Auswahlventil 21 bzw. 22 eingeschaltet, welches, wie später beschrieben, der Antriebsschlupfregelung dient. Hierzu besitzen beide Zweigleitung 18 bzw. 19 einen Anschluß über eine Anschlußleitung 23 und ein Ventil 24 zu der Rücklaufleitung 15. Dieses Ventil 24 besitzt zum einen eine Rücklaufposition für den Abbau von Bremsdruck und zum anderen eine Rückschlagposition 26.

Beiden Bremskreisen I und II ist ein Einspeisesystem E zugeordnet. Im vorliegenden Ausführungsbeispiel weist dieses Einspeisesystem E eine einkreisige Pumpe auf, welche bevorzugt selbstansaugend ausgebildet ist. Falls jedoch der Volumenstrom nicht ausreicht, sollte noch eine zusätzliche Speichereinleitung vorgesehen sein. Ferner handelt es sich bei der Pumpe um eine separate, elektromotorisch betriebene Pumpe, welche auch eine Tandem- bzw. Flanschpumpe sein kann. Diese Pumpe 27 fördert Bremsflüssigkeit in dem Einspeisesystem E. Diese Bremsflüssigkeit entnimmt sie dem Vorratsbehälter 16, wobei in die entsprechende Anschlußleitung 28 ein Pumpenrückschlagventil 29 eingeschaltet ist.

Die Förderung der Bremsflüssigkeit erfolgt durch ein weiteres Pumpenrückschlagventil 30, nach welchem eine Leitung 31 abzweigt, die mit der Hauptleitung 17 des II. Bremskreises nach dem Absperrventil 20 verbunden ist. Beide Pumpenrückschlagventile 29,30 sind integrierte Elemente der Pumpe 27. Ferner ist in die Leitung 31 auch ein Einspeiseventil 32 eingeschaltet, über welches die Leitung 31 geschlossen werden kann. Für dieses Einspeiseventil 32 ist wiederum ein Bypaß 33 mit einem entsprechenden Rückschlagventil 34 vorgesehen.

Eine weitere Leitung 35 führt nach dem Rückschlagventil 30 durch ein Absperrventil 36 zu einem Druckbegrenzungsventil 37. Diesem Druckbegrenzungsventil 37 folgt ein zweites Druckbegrenzungsventil 38 nach, welches über eine Verbindungsleitung 39 zur Rücklaufleitung 15 führt. Dabei handelt es sich hier um ein druckgesteuertes Ventil.

Zwischen Druckbegrenzungsventil 37 und Druckbegrenzungsventil 38 zweigt eine Einspeiseleitung 41 ab, welche sich aufzweigt und mit einer Zweigleitung 42 über ein Einspeiseventil 43 sowie ein darauf folgendes Rückschlagventil 44 mit der Zweigleitung 5 zum linken Vorderrad verbunden ist. Eine zweite Zweigleitung 45 mit eingeschaltetem Einspeiseventil 46 und darauf folgendem Rückschlagventil 47 führt zur Zweigleitung 6 zum rechten Vorderrad.

Ferner besitzt die Rücklaufleitung 15 noch einen Anschluß 48 an die Leitung 31 und zwar nach dem Einspeiseventil 32. In diesen Anschluß ist ein Differenzdruckbegrenzungsventil 49 als druckbeaufschlagtes Ventil eingesetzt, welches eine nur gestrichelt dargestellte Verbindung 50 zur Hauptleitung 17 des II. Bremskreises besitzt.

Die Funktionsweise der erfindungsgemäßen Bremsanlage ist folgende:

1. Eine Normalbremsung ist auf konventionellem Wege im Bremskreis I möglich, wobei durch den Druckaufbau im Hauptbremszylinder 1 der Bremskreis I mit Bremsdruck versorgt wird, wobei dieser Bremsdruck dann auf die entsprechenden Radbremszylinder im linken und rechten Vorderrad wirkt. Für die Hinterachse wird über das Einspeiseventil 32 Fluid mit erhöhtem Druck gegenüber dem Bremskreis I hinter dem Absperrventil 20 eingespeist, womit die Radbremszylinder der Hinterradbremsen versorgt werden.

2. Beim Auftreten einer Antiblockierregelung schließen die Absperrventile 7,8 und Absperrventil 20 bleibt geschlossen. Hierdurch werden bzw. sind die entsprechenden Hauptleitungen 4 bzw. 17 der beiden Bremskreise I bzw. II abgekoppelt. Der Aufbau eines Bremsdruckes für die Radbremszylinder wird über die Einspeiseventile 32, 43 und 46 sowie die entsprechenden Ablaßventile 13, 14 und 24 moduliert. Die Pumpe 27 läuft dabei entweder dauernd oder fördert Bremsflüssigkeit ab Bremsbeginn.

3. Eine Antriebsschlupfregelung erfolgt über die Absperr- und Auswahlventile 21, 22 und 36, wobei die Einspeisung bei Hinterradantrieb über das Einspeiseventil 32 erfolgt. Die Druckbegrenzung für ASR übernimmt bei geschlossenem Absperrventil 36 das differenzdruckgesteuerte Druckbegrenzungsventil 49 (Systemschutzfunktion).

Das Absperrventil 20 ist im übrigen normalerweise auf Sperrstellung geschaltet und zwar sowohl bei Normalbremsung wie auch bei einer Antiblockier- bzw. Antriebsschlupfregelung. Es nimmt nur bei Servodruckausfall, was beispielsweise beim Ausfall der Pumpe 27 geschehen kann, seine Offenstellung ein. Eine Bremsung der Räder der Hinterachse über den Hauptbremszylinder ist immer möglich, d. h. in Notsituationen bleibt eine volle Bremsflüssigkeitsreserve für den II. Bremskreis bestehen. Die Nachsaugmöglichkeit für die Radbremszylinder des linken und rechten Hinterrades gewährleitstet die Rückschlagposition des Ablaßventil 24.

Bei Ausfall des Bremskreises I bzw. II bleibt der jeweils andere Bremskreis intakt, während das Einspeisesystem abgeschaltet wird.

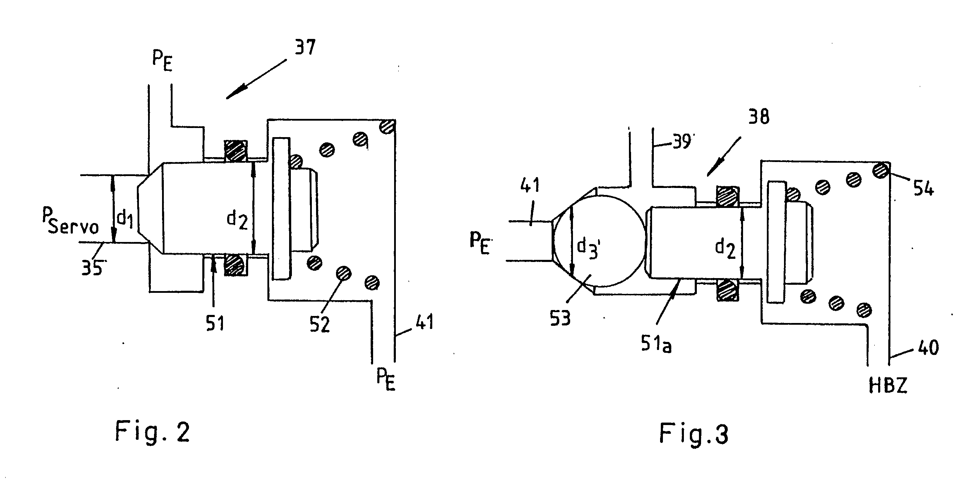

Die Bremskraftverteilung wird im wesentlichen über die Druckbegrenzungsventile 37 bzw. 38 gesteuert. Hierzu ist das Druckbegrenzungsventil 37 mit zwei verschieden großen, hydraulisch beaufschlagten Flächen versehen, wie dies in Figur 2 angedeutet ist. Dort wird ein entsprechender Ventilkörper 51 unter dem Druck einer Schraubenfeder 52 in der gezeigten Lage gehalten. Den Druck der Schraubenfeder unterstützt ein Einspeisedruck $P_E$, welcher in der Einspeiseleitung 41 vorherrscht.

Der Ventilkörper 51 besitzt einen Durchmesser $d_2$, welcher größer ist als der Durchmesser $d_1$ der Leitung 35. In dieser Leitung steht der Servodruck $P_{Servo}$ an. Allerdings wird die Leitung 35 durch den Ventilkörper 51 verschlossen und so von der Einspeiseleitung getrennt. Zum Öffnen dieses Druckbegrenzungsventiles muß der Druck $P_{Servo}$ größer sein als der Haltedruck $P_E$`.

Das auf das Druckbegrenzungsventil 37 folgende Druckbegrenzungsventil 38 besitzt zum einen den Anschluß an die Einspeiseleitung 41, in welche der Einspeisedruck $P_E$ wirksam ist. Über einen weiteren Ventilkörper 51a mit dem Durchmesser $d_2$ wird eine Ventilkugel 53 gegen die Öffnung der Einspeiseleitung 41 gedrückt, wobei der entsprechende wirksame Ventilsitz einen Durchmesser von $d_3$ aufweist. In diesem Fall ist $d_3$ gleich $d_2$. Solange die Kugel 53 die Leitung 41 verschlossen hält, wird eine Verbindung zwischen Einspeiseleitung 41 und Verbindungsleitung 39 zum Rücklauf bzw. Vorratsbehälter 16 unterbrochen. Die Schließkraft des Ventilkörpers 51a wird zum einen durch eine Schraubenfeder 54 und zum anderen durch die Druckererfassung über die Verbindung 40 zum Hauptbremszylinder 1 hin aufrecht erhalten.

Durch eine derartige erfindungsgemäße Bremskraftverteilung tritt keine Pedalrückwirkung auf. Es findet auch kein kurzes, sprunghaftes Ansteigen des Druckes in den Radbremszylindern statt. Es erfolgt nur eine relative Überhöhung des Druckes in den Radbremszylindern der Räder der Hinterachse gegenüber demjenigen in den Radbremszylindern der Räder der Vorderachse. Eine absolute Drucküberhöhung findet nicht statt. Diese wichtige Sicherheitsfunktion gewährleistet, daß das Einspeisesystem niemals eine Bremsung gegen den Willen des Fahrers einleiten kann, wie dies beispielsweise bei den vollkommen von einer Fahrertätigkeit abgekoppelten Systemen möglich ist.

Bei der vorliegenden Bremsanlage findet eine Sensierung folgender Funktionen statt:
- Radverhalten durch entsprechnde Radsensoren
- ein Druckdifferenzsensor erkennt einen Kreisausfall im Hauptbremszylinder
- Funktion der Servopumpe.

Sollten die Sensoren entsprechendes Fehlverhalten melden, so müssen über ein nicht näher dargestelltes Steuergerät die gewünschten Schaltungen im Einspeisesystem und dem System der restlichen Bremsanlage vorgenommen werden.

Die Bremsanlage gemäß Figur 1 bezieht sich im übrigen auf ein 3-Kanal-Antiblockiersystem bei Schwarz-Weiß-Bremskreisaufteilung. Für ein 4-Kanal-Antiblockiersystem kann dieselbe Konfiguration Anwendung finden und ist ohne prinzipielle Unterschiede und größere Änderungen realisierbar.

Wird aus bestimmten Gründen für das Absperrventil 20 ein stromlos offenes 2/2-Magnetventil vorgesehen, so ist das Einspeiseventil 32 in Ausgangsstellung (stromlos) geschlossen. Das Absperrventil 20 muß nun bei jeder Bremsung vor dem Einspeiseventil 32 geschaltet werden, da sonst eine deutliche Pedalrückwirkung auftreten und der Hauptbremszylinderkolben zurückgeschoben würde. Hierdurch könnten Schäden am Zentralventil des Hauptbremszylinders auftreten. Der Druck in den Radbremszylindern würde zudem sprungartig ansteigen, wodurch der Fahrkomfort leidet und zudem eine häufige Antiblockierregelung provoziert würde. Das Absperrventil 20 muß bei einer Bremsbetätigung schnell schalten, um eine ausreichende Fluidmenge im Hauptbremszylinder vorzuhalten.

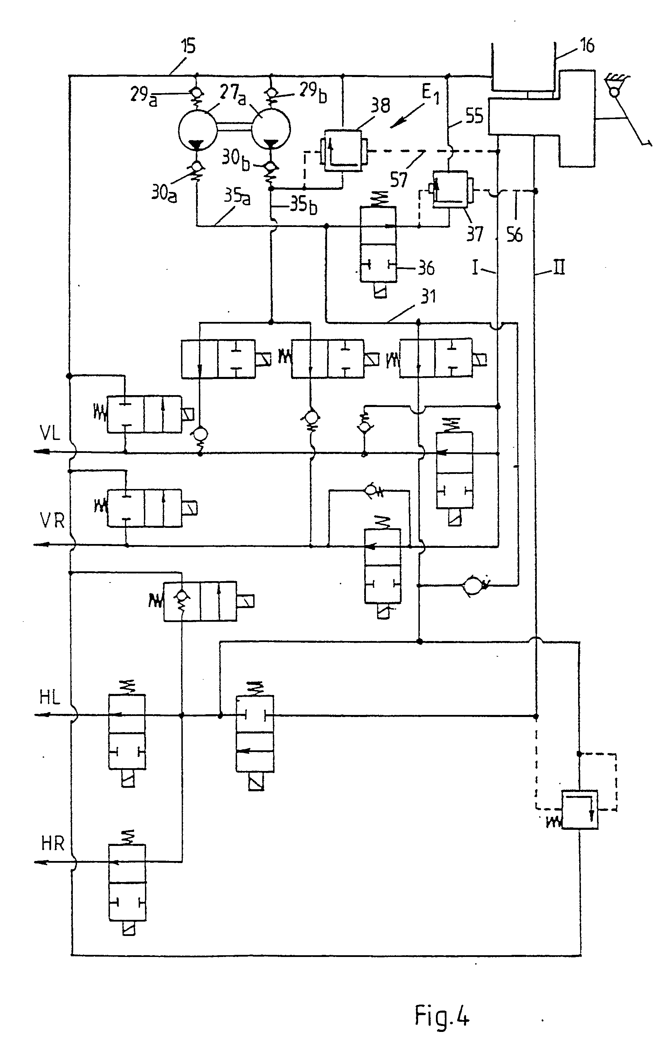

Das Ausführungsbeispiel einer weiteren Bremsanlage gemäß Figur 4 unterscheidet sich von derjenigen nach Figur 1 insbesondere durch die Ausgestaltung des Einspeisesystems $E_1$. Für dieses Einspeisesystem $E_1$ ist eine zweikreisige Pumpe 27a vorgesehen. Entsprechende Pumpenrückschlagventile 29a und 29b verbinden die Pumpe 27a mit der Rücklaufleitung 15. Ebenfalls sind der Pumpe 27a die Pumpenrückschlagventile 30a und 30b nachgeschaltet. Die Pumpenrückschlagventile 29a,29b bzw. 30a,30b sind integrale Bestandteile der jeweiligen Pumpe.

Den einen Pumpenkreis verbindet die Leitung 35a über das Absperrventil 36 mit dem Druckbegrenzungsventil 37. Dieses Druckbegrenzungsventil ist im vorliegenden Ausführungsbeispiel als druckgesteuertes Ventil mit dem Rücklauf 15 über die Leitung 55 verbunden.

Die Regelung der Einspeisung für den Vorderachsenbremskreis erfolgt dagegen durch den zweiten Kreis der Pumpe 27a über die Leitung 35b. Diese Leitung wird durch das Druckbegrenzungsventil 38 mit der Rücklaufleitung 15 verbunden. Ferner besitzt dieses Druckbegrenzungsventil 38 auch einen Anschluß 57 an den I. Bremskreis. Ein erwünschter Druckunterschied zwischen dem I. und II. Bremskreis wird wiederum durch das Druckbegrenzungsventil 37 gewährleistet, welches entsprechend Figur 2 zwei unterschiedlich mit Druck beaufschlagbare Flächen besitzt.

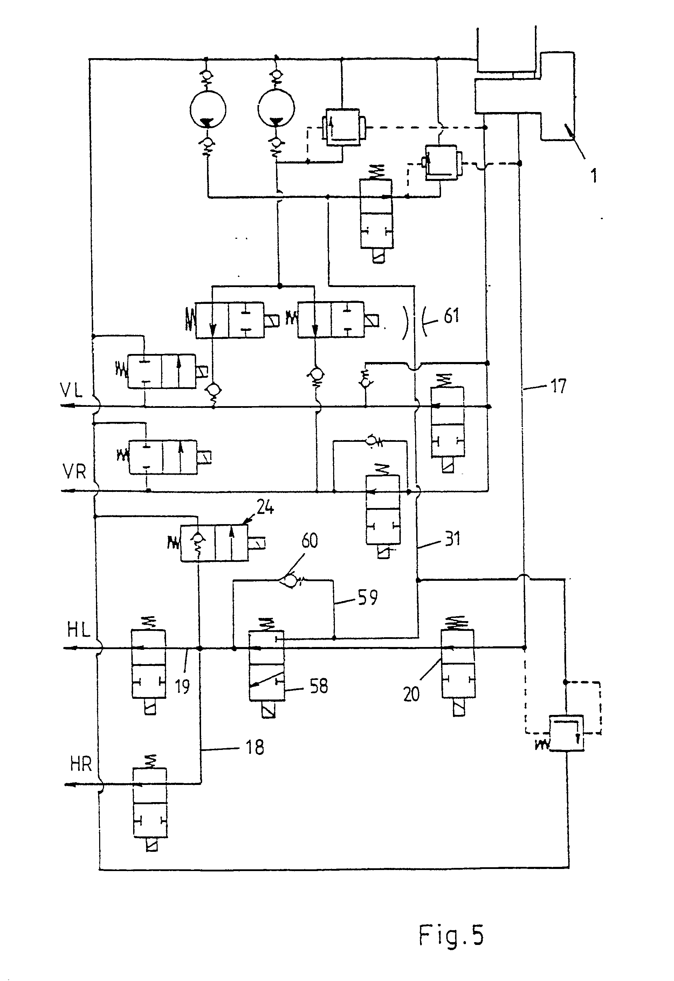

In Figur 5 ist ein weiteres Ausführungsbeispiel einer erfindungsgemäßen Bremsanlage gezeigt, wobei dort das Einspeiseventil 32 durch ein Einspeise- und Absperrventil 58 ersetzt ist. Durch dieses kombinierte Ventil 58 sind die aufeinanderfolgenden Ventilfunktionen gewährleistet, die sonst nacheinander gemäß der Beschreibung zu Figur 1 ablaufen müssen. In der gezeigten Stellung sperrt das Ventil 58 die Leitung 31, während es den Durchlaß von Bremsflüssigkeit aus dem Hauptbremszylinder 1 zum linken und rechten Hinterrad zuläßt.

Wird das Ventil 58 umgeschaltet, so ist die Hauptleitung 17 gesperrt, jedoch die Speiseleitung 31 mit den entsprechenden Zweigleitungen 18 bzw. 19 verbunden. Zwischen Leitung 31 und Hauptleitung 17 umgibt das Ventil 58 ein weiterer Bypaß 59, der mit einem Rückschlagventil 60 besetzt ist. Es sollte eventuell sichergestellt werden, daß das Ablaßventil 24 erst betätigt werden kann, wenn das Kombinationsventil 58 umgeschaltet ist. Dies kann beispielsweise durch einen entsprechenden Schalter bzw. ein Relais od. dgl. erfolgen.

Des weiteren ist eine Drossel 61 in der Leitung 31 vorgesehen. Durch diese Drossel findet eine Begrenzung des Druckaufbaugradienten in den Radbremszylindern des linken und rechten Hinterrades bei Umschaltung auf den Einspeisebetrieb zur Anhebung des Hinterachsbremsdruckes statt.

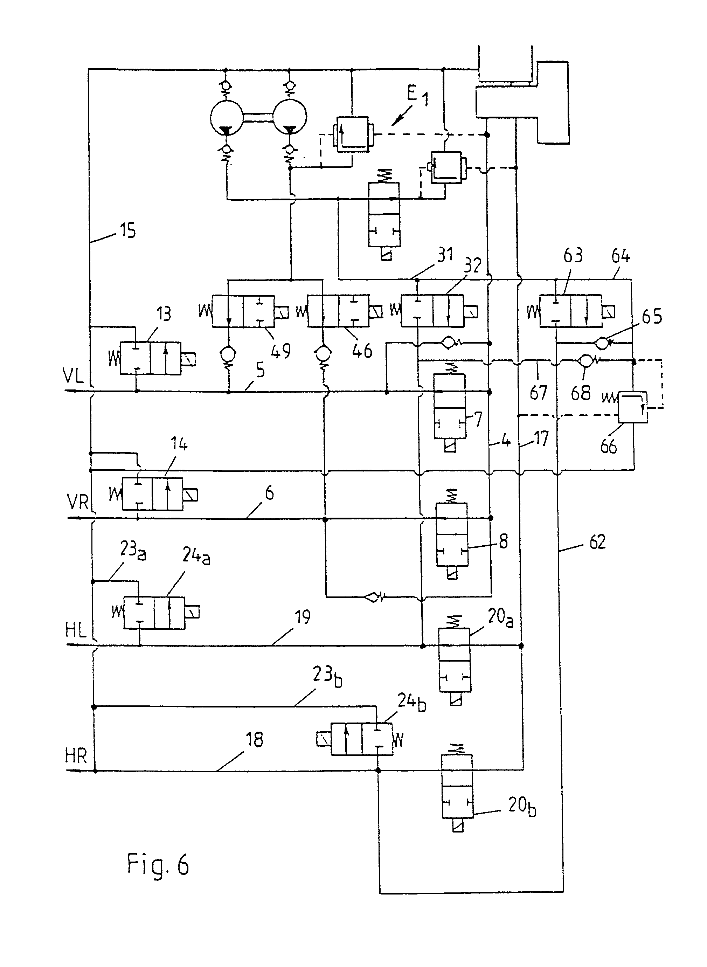

In Figur 6 ist wiederum ein Ausführungsbeispiel einer erfindungsgemäßen elektrischen bzw. elektronischen Bremskraftverteilung gezeigt und zwar in einem 4-Kanal-Antiblockiersystem. Die Bremskreisaufteilung ist ebenfalls Schwarz-Weiß. Sowohl für das linke wie auch für das rechte Hinterrad ist ein getrenntes Absperrventil 20a bzw. 20b vorgesehen. Ebenfalls ist jede Zweigleitung 18 bzw. 19 zwischen dem jeweiligen Radbremszylinder und dem Absperrventil 20a bzw. 20b eine Anschlußleitung 23a bzw. 23b zur Rücklaufleitung 15 vorhanden, wobei die dort eingeschalteten Ablaßventile 24a bzw. 24b normale übliche Absperrventile sind.

Das Einspeisesystem $E_1$ entspricht demjenigen nach Figur 4. Zum getrennten Einspeisen für das linke und das rechte Hinterrad ist jedoch eine Zusatzleitung 62 vorgesehen, welche die Leitung 31 mit der Zweigleitung 18 verbindet. In diese Leitung 62 ist ein weiteres Absperrventil 63 eingeschaltet, welches von einem Bypaß 64 mit Rückschlagventil 65 umgeben ist.

Der Druckeinstellung für Antriebsschlupfregelung in diesem System dient ein Druckbegrenzungsventil 66, welches einerseits an den Bypaß 64 und andererseits an die Rückführleitung 15 angeschlossen ist. Durch das Druckbegrenzungsventil 66 findet ein Druckvergleich mit dem Druck in der Hauptleitung 17 des II. Bremskreises sowie mit dem Druck in der Bypaßleitung 64 statt, wobei hier gleichzeitig eine Verbindung 67 über ein Rückschlagventil 68 zu der Einspeiseleitung 31 gegeben ist.

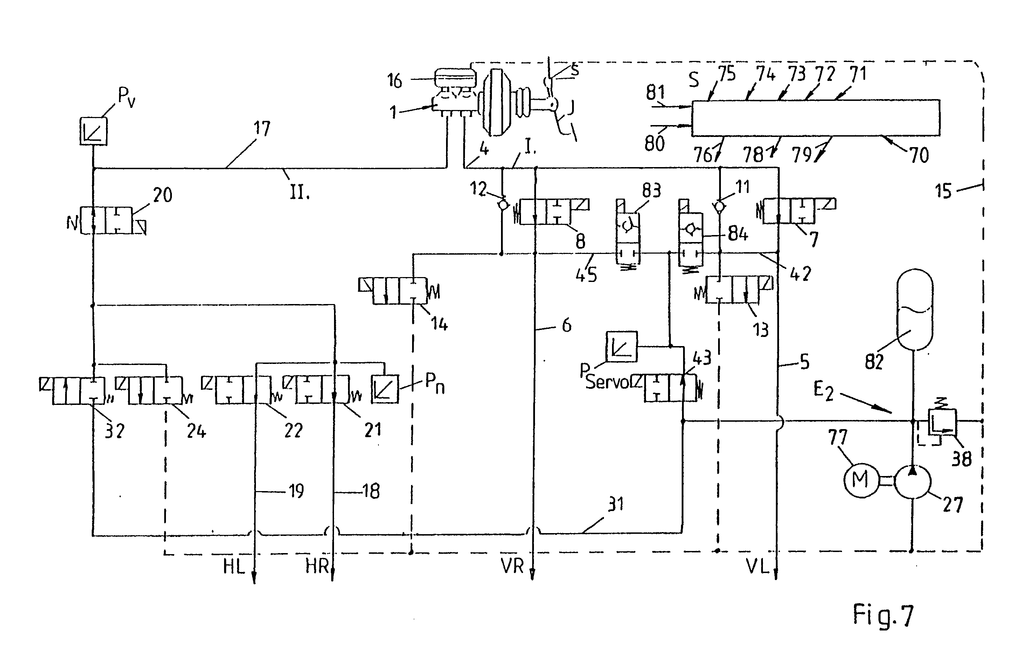

In dem Ausführungsbeispiel einer erfindungsgemäßen Bremsanlage gemäß Figur 7 ist eine Steuereinheit 70 vorgesehen, über welche die gesamte Bremsanlage gesteuert wird. Dieses Steuergerät beinhaltet einen Anschluß 71 an die nicht näher gezeigten Radsensoren, einen weiteren Anschluß 72 an eine Servodruckaufnahme $P_{Servo}$, einen weiteren Anschluß 73 an eine Druckaufnahme $P_n$ zur Aufnahme des Hinterachsendruckes, einen Anschluß 74 zur Aufnahme des Vorderachsendruckes $P_v$ sowie einen Anschluß 75 zur Aufnahme des Bremspedalweges S. Ferner übernimmt die Steuereinheit die Steuerung der Ventile, wobei hier der Übersichtlichkeit halber nur ein Ausgang 76 vorgesehen ist. Des weiteren wird über die Steuereinheit 70 ein Motor 77 für die Pumpe 27 angesteuert. Hierzu ist der Ausgang 78 vorgesehen. Eine Warnlampe 79 zeigt Störungen in der Bremsanlage an. Die gesamte Steuereinheit besitzt weitere Anschlüsse 80 und 81 an Batterie bzw. Zündung.

Im I. Bremskreis für die Räder der Vorderachse befinden sich die Absperrventile 7 und 8. Diesen Absperrventilen sind gleichfalls die bereits oben beschriebenen Rückschlagventile 11 und 12 zugeordnet. Anstelle der beiden Einspeiseventile 43 und 46 mit den Rückschlagventilen 44 und 47 ist jedoch im vorliegenden Fall zwischen der Pumpe 27 bzw. einem entsprechenden Speicher 82 nur das Einspeiseventil 43 vorgesehen, nach welchem jedoch die entsprechende Zweigleitung 45 zu der Zweigleitung 6 bzw. die Zweigleitung 42 zu der Zweigleitung 5 anstelle der Rückschlagventile 44 bzw. 47 mit zusätzlichen Magnetventilen 83 bzw. 84 besetzt sind. Diese Magnetventile besitzen eine Sperrstellung und eine Rückschlagposition.

Bei einer Teilbremsung sind das Absperrventil 7 und 8 auf Durchlaß geschaltet, während die Ablaßventile 13 und 14 sowie das Einspeiseventil 43 und die Magnetventile 83 und 84 in Sperrstellung ruhen. Hierdurch ist eine Druckmodulation in den Radbremszylindern des rechten und linken Vorderrades direkt durch Betätigung des Hauptbremszylinders möglich.

Bei intakter Steuereinheit 70 wird bei Teilbremsung das Absperrventil 20 in der Hauptleitung 17 des II. Bremskreises zu den Rädern der Hinterachse geschlossen sein. Ebenfalls auch die Absperr- bzw. Auswahlventile 21 und 22. Hier findet eine Druckmodulation über Einspeisung von Bremsflüssigkeit durch die Leitung 31 und das Einspeiseventil 32 über ein Einspeisesystem $E_2$ statt. Dieses Einspeisesystem $E_2$ unterscheidet sich von dem bisher gezeigten dadurch, daß nur ein Druckbegrenzungsventil 38 vorhanden ist, da hier keine Differenzdruckmessung im Einspeisesystem selbst vorgenommen wird. Die entsprechende Steuerung übernimmt die Steuereinheit 70.

Die Druckmodulation in dem II. Bremskreis erfolgt entsprechend der idealen Bremskraftverteilung und gesteuert durch die Steuereinheit 70. Diese vergleicht die aufgenommenen Druckwerte $P_n$ und $P_v$ und moduliert den Bremsdruck in der Hinterachse entsprechend einer vorgegebenen Idealkurve.

Tritt der Fall einer Antiblockierregelung an einem Rad der Vorderachse auf, so werden von der Steuereinheit 70 das Einspeiseventil 43, die Absperrventile 7 und 8 sowie die Magnetventile 83 und 84 angesteuert. Dies bedeutet, daß die Absperrventile 7 und 8 schließen, während das Einspeiseventil 43 öffnet. Die beiden Magnetventile 83 und 84 gehen in Rückschlagposition. Nunmehr kann von der Pumpe 27 Bremsflüssigkeit über das Einspeiseventil 43 sowie das Magnetventil 83 bzw. 84 zum rechten bzw. linken Vorderradbremszylinder gefördert werden. Die Druckeinstellung erfolgt über das Einspeiseventil 43.

Eine Druckreduzierung erfolgt danach über die Ablaßventile 13 bzw. 14 zurück in den Rücklauf 15.

Sollte beispielsweise im Falle einer Antiblokkierregelung nur das rechte Vorderrad geregelt werden, so stellt dies der entsprechende Radsensor fest, so daß beispielsweise dann das Magnetventil 84 geschlossen bleibt, während über die Ansteuerzeit des Einspeiseventils 43 eine Druckerhöhung durchgeführt wird. Fordert dann beispielsweise der Radsensor des linken Vorderrades zusätzlich einen Druckaufbau im Radbremszylinder des linken Vorderrades, so wird auch das Magnetventil 84 geöffnet. Das Leitungsvolumen, welches durch die Magnetventile 83 und 84 sowie das Einspeiseventil 43 begrenzt ist, ist annähernd inkompressibel, so daß kein Störvolumen gespeichert wird.

Verlangt kein Vorderrad einen Druckaufbau, so können die Magnetventile 83 und 84 dennoch in Rückschlagposition verbleiben, da dann das Einspeiseventil 43 geschlossen ist. In diesem Fall zeigt die Druckaufnahme $P_{Servo}$ nur den Druck an, welcher in der Leitung zwischen Einspeiseventil 43 bzw. dem Magnetventil 83 und 84 vorhanden ist. Während der Druckaufbauzeit bzw. nach Öffnen des Einspeiseventils 43 zeigt die Druckaufnahme $P_{Servo}$ den jeweiligen tatsächlichen Raddruck an (bei geöffneten Magnetventilen 83 und 84). Dabei läßt die Steuereinheit 70 im Falle des funktionsfähigen Systems keinen höheren Druck $P_{Servo}$ zu, als denjenigen von der Druckaufnahme $P_v$ angezeigten Druck, so daß in die Vorderradbremsen kein höherer Druck eingespeist wird als vom Fahrer vorgegeben.

Mit Hilfe des Pedalweggebers S wird dafür gesorgt, daß bei einer Reibwerterhöhung während der Antiblockierregelung die Kennlinienverschiebung nicht so groß wird, daß beim Lösen der Bremse das Zentralventil im Hauptbremszylinder beschädigt wird. Dies wird dadurch erreicht, daß im Bedarfsfall zusätzlicher Pedalweg zugelassen wird, sei es durch Druckaufbau in der Hauptleitung 4 bzw. den Zweigleitungen 5 und 6 über die Absperrventile 7 und 8 zum linken und rechten Vorderrad oder durch Volumenverschiebung aus dem Hauptbremszylinder in den Vorratsbehälter 16 über das Absperrventil 20 und das Ablaßventil 24. Ein Bedarfsfall liegt vor allem dann vor, wenn der von der Steuereinheit 70 geforderte Zusammenhang zwischen dem Pedalweg und dem Vorderachsendruck $P_v$ nicht gegeben ist. Im übrigen kann die Kurve des geforderten Mindest- Pedalweges auch abhängig gemacht werden von der Reibwerterhöhung während der Antiblockierregelung.

Es ist vorgesehen, die Nullstellung der Druckaufnehmer $P_n$ und $P_v$ zu korrigieren, wenn mit dem Pedalweggeber S erkannt wird, daß keine Bremsung stattfindet. Die Nullstellung des Druckaufnehmers $P_{Servo}$ kann dagegen korrigiert werden, indem zeitweise eine Ansteuerung des Einspeiseventils 43 und der Magnetventile 83 und 84 stattfindet, solange nicht gebremst wird. Auch diese Nullstellung erfolgt über die Steuereinheit selbsttätig.

Des weiteren wird der Entlüftungszustand des II. Bremskreises für das rechte und linke Hinterrad überwacht. Dies geschieht mit einem Testzyklus bei stillstehendem Fahrzeug. Das Absperrventil 20 wird geschlossen, das Einspeiseventil 32 geöffnet, wobei das Zeitverhalten des Druckaufnehmers $P_n$ überwacht wird. Hierbei wird zum einen die Zeit ermittelt, welche beispielsweise benötigt wird, um den Druck auf 20bar zu erhöhen und danach, welche Zeit t2 benötigt wird, um den Druck von 20bar auf 50bar zu erhöhen. Aus der Zeit t2 kann auf die Temperatur der Flüssigkeit geschlossen werden, so daß eine Zeit tl berechnet werden kann, die nicht überschritten wird, wenn der Entlüftungszustand des Hinterachsenbremskreises in Ordnung ist.

Dieser Testzyklus beruht auf der Überlegung, daß im oberen Druckbereich (über etwa 20bar) der Gradient nicht mehr vom Entlüftungszustand abhängig ist.

Ein Kreisausfall beispielsweise des Bremskreises I der Vorderachse wird über den Vergleich zwischen Bremspedalweggeber und Druckaufnehmer $P_v$ erkannt. Während der Antiblockierregelung wird ein Kreisausfall über die Ansteuerzeit der Ventile 7, 8, 43, 83 bzw. 84 erkannt.

Bei Erkennen eines Kreisausfalles des Kreises I verbietet sich ein Einspeisen von Bremsflüssigkeit in den I. Bremskreis der Vorderachse, die Kolbenstange 2 mit dem Stangenkolben wird auf den nicht näher gezeigten Schwimmkolben im Hauptbremszylinder 1 auflaufen. Da das Absperrventil 20 geschlossen ist, ist jedoch kein weiterer Pedalweg mehr möglich, allerdings kann der Bremskraftverstärkungsfaktor (= Verhältnis von Pedalkraft zu Druck P) so gewählt werden, daß sich für die vorliegende Situation ein Optimum ergibt. In diesem Fall ist dann im Verhältnis zwischen $P_v$ und $P_n$ auch eine Nichtlinearität möglich.

Zur Antischlupfregelung für die Räder der Hinterachse wird das Absperrventil 20 geschlossen und durch das Einspeisesystem $E_2$ Bremsflüssigkeit über die Leitung 31 sowie das Einspeiseventil 32 in den II. Bremskreis eingegeben.

Die Absperr- bzw. Auswahlventile 21 und 22 sind ebenfalls geöffnet, so daß diese eingespeiste Bremsflüssigkeit zu den Radbremszylindern des linken und rechten Hinterrades gelangen kann. Die Rückführung erfolgt über das Ablaßventil 24. Die Modulation geschieht nach dem bekannten hydraulischen Multiplex-Verfahren.

**Patentansprüche**

1. Bremsanlage mit einem Hauptbremszylinder zur Abgabe eines mittels eines Bremspedals steuerbaren Bremsdruckes und dessen Übertragung auf zumindest einen Bremskreis, welcher den Hauptbremszylinder mit entsprechenden Radbremszylindern von Vorderrädern und Hinterrädern verbindet, wobei in jede Hauptleitung der Bremskreise zumindest ein Absperrventil eingeschaltet ist, dadurch gekennzeichnet, daß ein I. und II. Bremskreis nach den Absperrventilen (7,8,20) mit einem Einspeisesystem (E) in Verbindung stehen, welches Einrichtungen (37,38,70) zum Einspeisen von Bremsflüssigkeit unterschiedlichen Druckes in den I. und II. Bremskreis aufweist.

2. Bremsanlage nach Anspruch 1, dadurch gekennzeichnet, daß zwischen dem I. bzw. II. Bremskreis und dem Einspeisesystem (E) zumindest ein Einspeiseventil (32,43,46) eingeschaltet ist.

3. Bremsanlage nach Anspruch 2, dadurch gekennzeichnet, daß zwischen Einspeiseventil (43,46) und Bremskreis (I) jeweils ein Rückschlagventil (44,47) angeordnet ist.

4. Bremsanlage nach Anspruch 2, dadurch gekennzeichnet, daß zwischen Einspeiseventil (43) und Bremskreis (I) zumindest ein Magnetventil (83,84) mit einer Rückschlagposition angeordnet ist.

5. Bremsanlage nach wenigstens einem der Ansprüche 1 bis 4, dadurch gekennzeichnet, daß das Einspeisesystem (E) eine selbstansaugende Pumpe (27) sowie ggfs. einen Speicher (82) aufweist.

6. Bremsanlage nach Anspruch 5, dadurch gekennzeichnet, daß die Pumpe (27) über eine Leitung (31) direkt mit dem Einspeiseventil (32) des II. Bremskreises verbunden ist, während der Einspeisedruck für das/die Einspeiseventil/e (43,46) des I. Bremskreises über Druckbegrenzungsventile (37,38) angleichbar ist.

7. Bremsanlage nach Anspruch 6, dadurch gekennzeichnet, daß auf die Pumpe (27) folgend das Druckbegrenzungsventil (37) und darauf folgend das Druckbegrenzungsventil (38) mit einer Verbindungsleitung (39) zu einem Vorratsbehälter (16) für Bremsflüssigkeit angeordnet ist, wobei eine Einspeiseleitung (41) zu dem/n Einspeiseventil/en (43,46) des I. Bremskreises von der Leitung zwischen den beiden Druckbegrenzungsventilen (37,38) abzweigt.

8. Bremsanlage nach Anspruch 7, dadurch gekennzeichnet, daß die in das Druckbegrenzungsventil (37) einmündende Leitung (35) von der Pumpe (27) einen Durchmesser ($d_1$) aufweist, welcher kleiner ist als ein Durchmesser ($d_2$) eines Ventilkörpers (51), der die Leitung (35) verschließt und andererseits von einem Einspeisedruck ($P_E$) zwischen den beiden Druckbegrenzungsventilen (37,38) beaufschlagbar ist.

9. Bremsanlage nach Anspruch 7 oder 8, dadurch gekennzeichnet, daß die von dem anderen Druckbegrenzungsventil (37) kommende Leitung mit einer Kugel (53) od. dgl. unter Bildung eines Ventilsitzes mit einem Durchmesser ($d_3$) verschlossen ist, welcher demjenigen ($d_2$) eines Ventilkörpers (51a) entspricht, der die Kugel (53) einerseits in dem Ventilsitz hält und andererseits vom Druck, der in dem II. Bremskreis vom Hauptbremszylinder bis zum Absperrventil (20) herrscht, beaufschlagbar ist.

10. Bremsanlage nach wenigstens einem der Ansprüche 6 bis 9, dadurch gekennzeichnet, daß zwischen Pumpe (27) und Druckbegrenzungsventil (37) nach der Abzweigung der Leitung (31) für das Einspeisen von Bremsflüssigkeit in den II. Bremskreis ein Absperrventil (36) zur Druckbereitstellung eines Arbeitsvordruckes für eine Antriebsschlupfregelung des I. Bremskreises vorgesehen ist.

11. Bremsanlage nach wenigstens einem der Ansprüche 6 bis 10, dadurch gekennzeichnet, daß die Antriebsschlupfregelung im II. Bremskreis nach dem Einspeiseventil (32) über entsprechende Absperr- und Auswahlventile (21,22) erfolgt.

12. Bremsanlage nach Anspruch 5, dadurch gekennzeichnet, daß die Pumpe eine zweikreisige Pumpe (27a) ist, wobei ein Kreis direkt mit dem/n Einspeiseventil/en (43,46) des I. Bremskreises über die Leitung (35b) und der zweite Kreis über eine Leitung (35a) mit dem Einspeiseventil (32) des II. Bremskreises verbunden ist.

13. Bremsanlage nach Anspruch 12, dadurch gekennzeichnet, daß dem ersten Kreis der Pumpe (27a) ein Druckbegrenzungsventil (38) zugeordnet ist, welches die Leitung (35b) mit einer Rückführleitung (15) zu einem Vorratsbehälter (16) für Bremsflüssigkeit verbindet, wobei es seinen Grenzwert über einen Anschluß (57) an eine aus dem Hauptbremszylinder (1) ausmündende Hauptleitung (4) des I. Bremskreises erhält.

14. Bremsanlage nach Anspruch 12 oder 13, dadurch gekennzeichnet, daß dem zweiten Kreis der Pumpe (27a) ein Druckbegrenzungsventil (38) zugeordnet ist, welches die Leitung (35a) mit einer Rückführleitung (15) zu einem Vorratsbehälter (16) für Bremsflüssigkeit verbindet, wobei es seinen Grenzwert über eine Anschlußleitung (56) an eine aus dem Hauptbremszylinder (1) ausmündende Hauptleitung (17) des II. Bremskreises erhält.

15. Bremsanlage nach Anspruch 14, dadurch gekennzeichnet, daß die vom Druck aus der Hauptleitung (17) beaufschlagte Fläche eines Ventilkörpers (51) innerhalb des Druckbegrenzungsventils (38) größer ist als die andere Fläche, welche unter dem Druck aus der Leitung (35a) steht.

16. Bremsanlage nach Anspruch 15, dadurch gekennzeichnet, daß der erste Kreis der zweikreisigen Pumpe (27a) über eine Einspeiseleitung (31) mit dem II. Bremskreis verbunden ist, wobei die Verbindung über ein Einspeise- und Absperrventil (58) erfolgt, welchem ggfs. eine Drossel (61) vorgeschaltet ist.

17. Bremsanlage nach wenigstens einem der Ansprüche 1 bis 5, dadurch gekennzeichnet, daß dem Einspeisesystem ($E_2$) ein Druckaufnehmer ($P_{Servo}$), dem II. Bremskreis ein Druckaufnehmer ($P_v$) für den Vorgabedruck des Hauptbremszylinder und ein Druckaufnehmer ($P_n$) für den realisierten Einspeisedruck zugeordnet ist.

18. Bremsanlage nach Anspruch 17, dadurch gekennzeichnet, daß dem Bremspedal (3) ein Pedalweggeber (S) zugeordnet ist.

19. Bremsanlage nach Anspruch 17 oder 18, dadurch gekennzeichnet, daß die Druckaufnehmer ($P_{Servo}$, $P_v$ und $P_n$) und ggfs. der Pedalweggeber (S) einen Anschluß an eine Steuereinheit (70) besitzen.

20. Bremsanlage nach Anspruch 19, dadurch gekennzeichnet, daß die Ventile (7,8,13,14,20,21,22,24,32,43,83,84) und ein Motor (77) der Pumpe (27) ebenfalls mit der Steuereinheit (70) verbunden sind.

21. Bremsanlage nach wenigstens einem der Ansprüche 17 bis 20, dadurch gekennzeichnet, daß die Pumpe (27) über ein Einspeiseventil (32) mit dem II. Bremskreis und über ein Einspeiseventil (43) mit dem I. Bremskreis verbunden ist.

22. Bremsanlage nach Anspruch 21, dadurch gekennzeichnet, daß zwischen das Einspeiseventil (43) und dem I. Bremskreis zumindest ein Magnetventil (83 bzw. 84) eingeschaltet ist.

Fig. 1

$P_E$

37

$P_{Servo}$

$d_1$

35'

$d_2$

51

52

41

$P_E$

**Fig. 2**

39'

38

41

$P_E$

$d_3'$

$d_2$

54

53

51a

40

HBZ

**Fig.3**

Fig.4

Fig.5

Fig. 6

Fig.7